# EUROPEAN PATENT SPECIFICATION

(11) **EP 4 167 897 B1**
(45) Date of publication and mention of the grant of the patent: **17.12.2025**
(21) Application number: 21826458.8
(22) Date of filing: 16.06.2021
(51) Int. Cl.: A61C 5/80, A61C 3/00, A61C 3/02, A61C 5/00, A61C 5/82, A61C 5/90, A61C 1/08

(54) **CUSTOM TOOTH CLAMP**
INDIVIDUELL ANGEPASSTE ZAHNKLEMME
PINCE À DENTS PERSONNALISÉE

(30) Priority: 17.06.2020 US 202063040401 P
(43) Date of publication of application: 26.04.2023
(73) Proprietor: Perceptive Technologies, Inc., Boston, MA 02111 (US)
(72) Inventor: CIRIELLO, Christopher, San Francisco, California 94123 (US); JACKSON, James, San Francisco, California 94123 (US); WEY, Gene, San Francisco, California 94123 (US); MULLER, Nathan John, San Francisco, California 94123 (US)
(74) Representative: Lucke, Andreas
(86) International application number: PCT/US2021/037635
(87) International publication number: WO 2021/257708

(56) References cited:
- WO-A1-2017/030426
- WO-A1-2019/215512
- KR-B1- 102 073 280
- US-A- 3 772 790
- US-A- 5 516 286
- US-A1- 2011 143 306
- US-A1- 2017 079 746
- US-A1- 2019 151 042
- US-A1- 2020 093 567
- US-A1- 2020 121 427
- US-A9- 2006 177 796

## Description

### BACKGROUND

Dental procedures are performed daily to cure a variety of oral conditions. The ability to perform dental procedures with high accuracy improves the effectiveness of such procedures and reduces patient side effects.

US2020121427A1 proposes a bite controlled drill-head guide plate including an upper matrix controlled by an upper tooth, and an upper alveolar bone or mucosa, and a lower matrix controlled by a lower tooth, and a lower alveolar bone or mucosa; a support body disposed between the upper matrix and the lower matrix; and a control mechanism for positioning and guiding an implant drill-head is disposed on the support body, the upper matrix or the lower matrix.

US2020093567A1 proposes a teeth-biting adjustable-control drill bit guide plate for implementing dental implant hole preparation. The guide plate includes upper and lower biting plates controlled by upper and lower teeth, and an adjustment mechanism for adjusting the upper biting plate and the lower biting plate multi-directionally.

KR102073280B1 proposes a prep guide which, in performing auto prep on a tooth, secures a fixed coordinate of a tooth to be treated during an operation and a procedure of an auto prep device comprising a multi-joint arm to enable an accurate auto prep procedure without being affected by minute shaking or position movement.

WO2017030426A1 proposes an auxiliary device for dental treatment comprising: a tooth fixing part formed to correspond to the mouth of a patient by utilizing 3D mouth image information obtained by capturing images of the mouth of the patient; a base part on which the tooth fixing part is supported; a first driving unit installed on the base part to be capable of 3-axis movement; a hand piece supported on the first driving unit; and a second driving unit installed on the hand piece and formed such that an operating part provided on an end of the hand piece is capable of pivoting about 2 axes of rotation or more.

### SUMMARY

The invention pertains to a tooth clamp for performing a dental procedure on a subject according to claim 1. Preferred embodiments are defined in the dependent claims.

### BRIEF DESCRIPTION OF THE DRAWINGS

The novel features of the disclosure are set forth with particularity in the appended claims. A better understanding of the features and advantages of the present disclosure will be obtained by reference to the following detailed description that sets forth illustrative embodiments, in which the principles of the disclosure are utilized, and the accompanying drawings of which:
**FIG. 1A** shows a top-view illustration of an exemplary primary tooth clamping system, per an embodiment herein;
**FIG. 1B** shows a side-view illustration of an exemplary primary tooth clamping system, per an embodiment herein;
**FIG. 2A** shows a top-view illustration of an exemplary chassis, per an embodiment herein;
**FIG. 2B** shows a side-view illustration of an exemplary chassis, per an embodiment herein;
**FIG. 3A** shows a top-view illustration of an exemplary impression media, per an embodiment herein;
**FIG. 3B** shows a side-view illustration of an exemplary impression media, per an embodiment herein;
**FIG. 4** shows a top-view illustration of an exemplary primary tooth clamping system in an open state, per an embodiment herein;
**FIG. 5** shows a top-view illustration of an exemplary primary tooth clamping system forming an impression in the impression media, per an embodiment herein;
**FIG. 6** shows a top-view illustration of an exemplary primary tooth clamping system in an open state with an impression in the impression media, per an embodiment herein;
**FIG. 7** shows a top-view illustration of an exemplary primary tooth clamping system in a closed state with an impression in the impression media, per an embodiment herein;
**FIG. 8** shows an exemplary side-view illustration of performing an impression scan of the exemplary tooth clamping system, per an embodiment herein;
**FIG. 9A** shows a top-view illustration of an exemplary packaging for containing the impression media, per an embodiment herein;
**FIG. 9B** shows a top-view illustration of an exemplary impression media and a packaging for containing the impression media, per an embodiment herein;
**FIG. 10** shows an image of an exemplary primary tooth clamping system, per an embodiment herein;
**FIG. 11** shows an image of installing an exemplary primary tooth clamping system into the mouth of the patient by clamping two or more teeth of the patient, per an embodiment herein;
**FIG. 12** shows an image of an exemplary primary tooth clamping system installed into the mouth of the patient, per an embodiment herein;
**FIG. 13** shows an illustration of an exemplary primary tooth clamping system installed into the mouth of a patient, per an embodiment herein;
**FIG. 14** shows an illustration of an exemplary primary tooth clamping system coupled to a dental cutting machine, per an embodiment herein;
**FIG. 15A** shows a front-right-top perspective illustration of an exemplary secondary tooth clamp, per an embodiment herein;
**FIG. 15B** shows a back-left-top perspective illustration of an exemplary secondary tooth clamp, per an embodiment herein;
**FIG. 16A** shows a front-right-top perspective illustration of an exemplary tertiary tooth clamp system, per an embodiment herein;
**FIG. 16B** shows a back-left-bottom perspective illustration of an exemplary tertiary tooth clamp system, per an embodiment herein;
**FIG. 17** shows a front-right-top perspective section-view illustration of an exemplary tertiary tooth clamp system, per an embodiment herein;
**FIG. 18** shows a top view illustration of an exemplary tertiary tooth clamp system, per an embodiment herein;

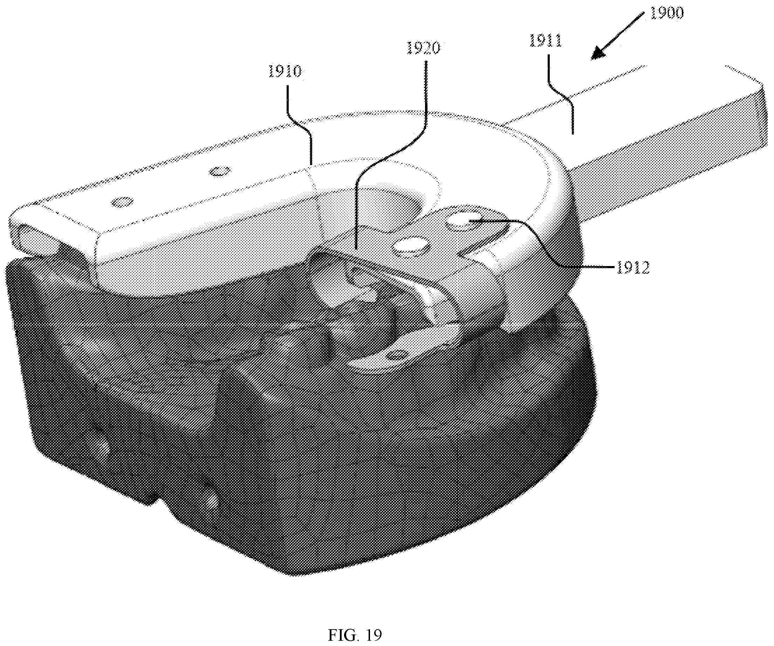

**FIG. 19** shows a back-left-top perspective illustration of an exemplary quaternary tooth clamp system, per an embodiment herein;
**FIG. 20A** shows a front-left-top perspective illustration of an exemplary quaternary tooth clamp system, per an embodiment herein;
**FIG. 20B** shows a front-right-top perspective illustration of an exemplary spring clip, per an embodiment herein;
**FIG. 21** shows a back-right-top perspective illustration of an exemplary tooth clamp system, having a gasket, per an embodiment herein;

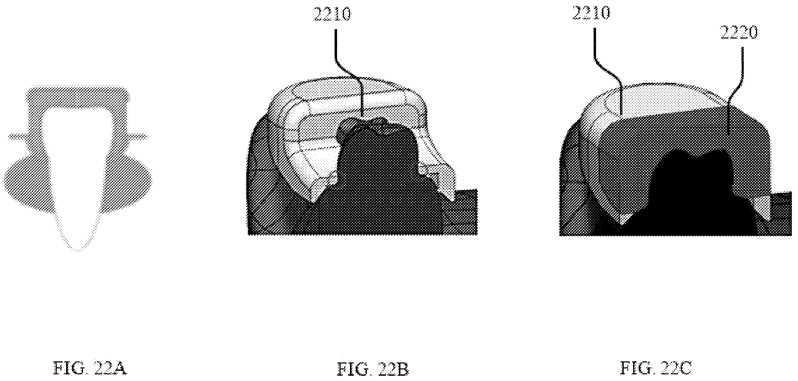

**FIG. 22A** shows a cross-section illustration of an exemplary first gum support, per an embodiment herein;
**FIG. 22B** shows a perspective cross-section illustration of an exemplary second gum support, per an embodiment herein;
**FIG. 22C** shows a perspective cross-section illustration of an exemplary third gum support, per an embodiment herein;
**FIG. 23** shows a cross-section illustration of an exemplary dental cutting machine, per an embodiment herein;
**FIG. 24** shows a diagram an exemplary dental cutting machine, per an embodiment herein; and
**FIG. 25** shows a non-limiting example of a computing device; in this case, a device with one or more processors, memory, storage, and a network interface.

### DETAILED DESCRIPTION

Provided herein are systems, methods, and kits, whose components, features, method steps, or any combination thereof herein enable dental treatments with high accuracy. Such high accuracy improves the effectiveness of such procedures and reduces patient side effects.

### Primary Tooth Clamping System

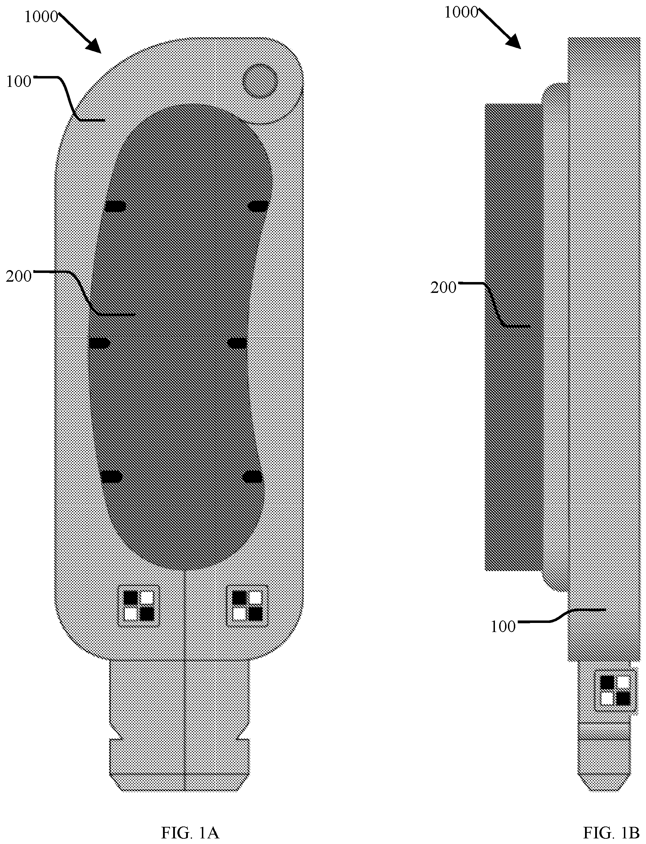

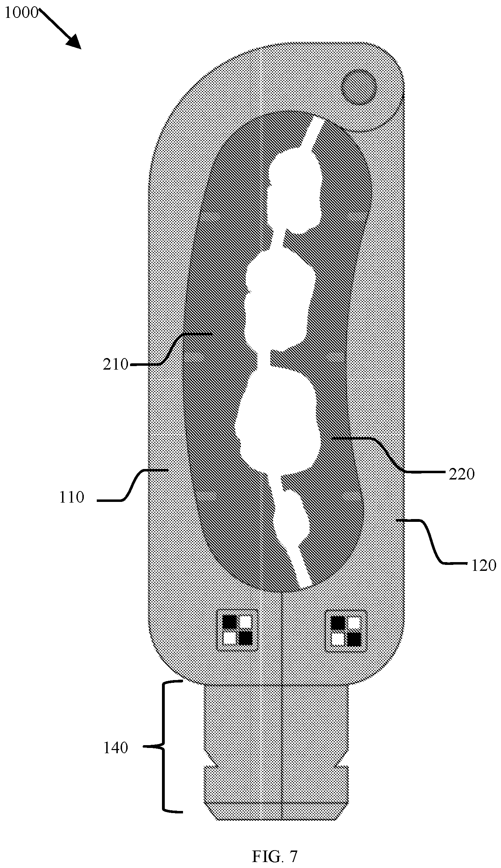

One aspect provided herein is a primary tooth clamping system **1000** for performing a dental procedure. Per **FIGS. 1-7****,** in some embodiments, the system comprises a first chassis **110** and a second chassis **120.**

In some embodiments, the first chassis **110** and the second chassis **120** are rotatably coupled. In some embodiments, the first chassis **110** and the second chassis **120** are rotatably coupled to enable the first chassis **110** and the second chassis **120** to clamp to a tooth **300** of a patient. In some embodiments, the first chassis **110** and the second chassis **120** are rotatably coupled at a distal end of the first chassis **110** or the second chassis **120.** In some embodiments, the first chassis **110** and the second chassis **120** are rotatably coupled at a distal end of the first chassis **110** and the second chassis **120.** In some embodiments, the first chassis **110** and the second chassis **120** are coupled such that the first chassis **110** rotates with respect to the second chassis **120** in an angular range of about 5 degrees to about 200 degrees. As shown, in some embodiments, the second chassis **120** is rotatably coupled to the first chassis **110** by a hinge **160.** Alternatively, in some embodiments, the second chassis **120** is rotatably coupled to the first chassis **110** by a pin, a hole, a tie, a band, a magnet, a clasp, a hook, a screw, a nut, a washer, or any combination thereof. In some embodiments, the first chassis **110** and the second chassis **120** have mirrored symmetry. In some embodiments, the second chassis **120** is removably coupled to the first chassis **110.** In some embodiments, the second chassis **120** is removably coupled to the first chassis **110** to enable cleaning and sterilization of the first chassis **110** and the second chassis **120.** In some embodiments, the second chassis **120** is permanently coupled to the first chassis **110.**

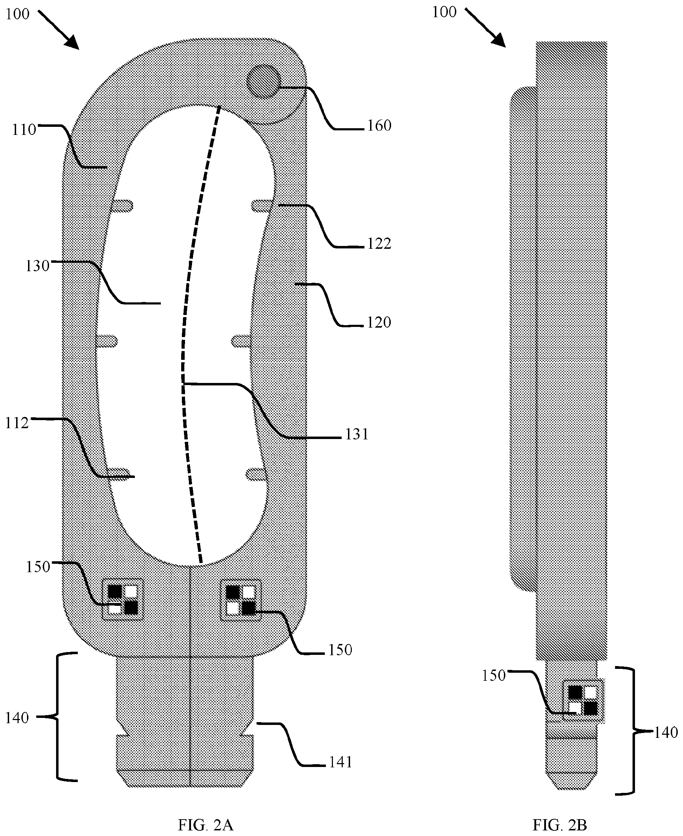

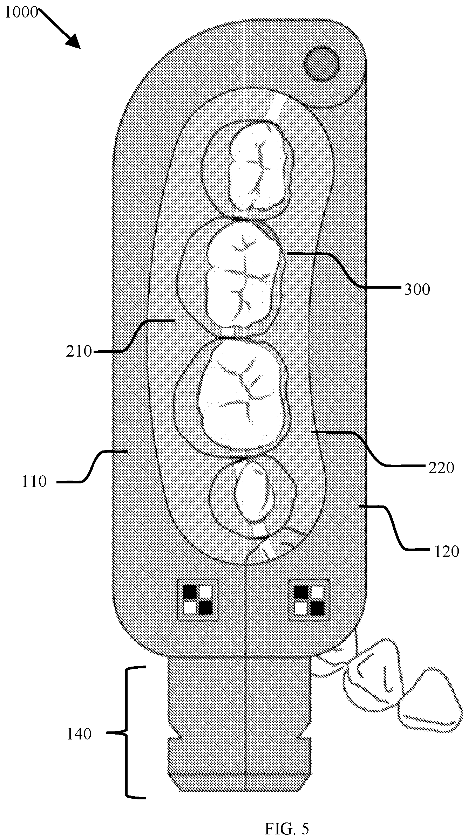

In some embodiments, the first chassis **110** and the second chassis **120** form a cavity **130** when the system is in a closed state. In some embodiments, a first portion of the perimeter of the cavity **130** bound by the first chassis **110** is greater than a second portion of the perimeter of the cavity **130** bound by the second chassis **120.** In some embodiments, a first portion of the perimeter of the cavity **130** bound by the first chassis **110** is less than a second portion of the perimeter of the cavity **130** bound by the second chassis **120.** In some embodiments, an entirety of the cavity **130** is bounded by the first chassis **110** and the second chassis **120.** In some embodiments, at most a portion of the cavity **130** is bounded by the first chassis **110** and the second chassis **120.** In some embodiments, the cavity **130** has a cross-section shape comprising a circle, a square, a rectangle, an ellipsoid, an obround, or any combination thereof. In some embodiments, the cross-sectional shape of the cavity **130** is a cross-sectional shape of the cavity **130** as viewed from the top of the primary tooth clamping system **1000,** as seen in **FIGS. 1A** and **2A****.** In some embodiments, the cross-sectional shape of the cavity **130** is consistent between a top face of the chassis **100** to a bottom surface of the chassis **100.** In some embodiments, the cross-sectional shape of the cavity **130** is prismatic. In some embodiments, the cross-sectional shape of the cavity **130** varies as a function of a distance from the top surface of the chassis **100** to the bottom surface of the chassis **100.** In some embodiments, the cavity **130** has an arcuate cross-sectional shape. In some embodiments, per **FIGS. 1A** and **2A****,** the cavity **130** has arcuate and obround cross-sectional shape. In some embodiments, the cavity **130** has an irregular cross-section shape. In some embodiments, an inner surface of the cavity **130** is rounded. In some embodiments, an inner surface of the cavity **130** is rounded to prevent damage to the mouth of the patient. In some embodiments, an inner surface of the cavity **130** is a half round. In some embodiments, an outer edge of the first chassis **110,** the second chassis **120,** or both comprises a fillet or a chamfer. In some embodiments, an outer edge of the first chassis **110,** the second chassis **120,** or both comprises a fillet or a chamfer to prevent injury to the mouth of the patient. In some embodiments, per **FIG. 5**, the cavity **130** is configured to receive one or more patient teeth **300.** In some embodiments, the size, shape, or both cavity **130** enables the cavity **130** to receive one or more patient teeth **300.**

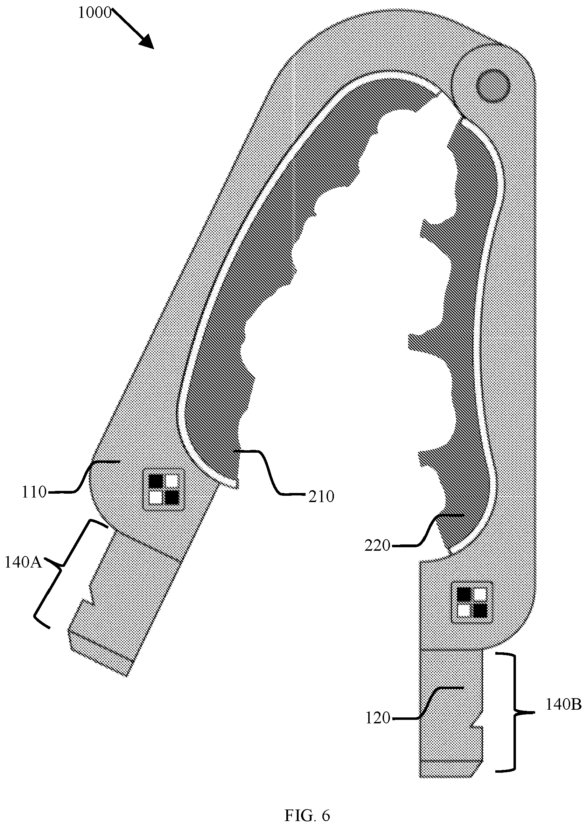

In some embodiments, per **FIG. 6**, a proximal portion of the first chassis **140A** and a proximal portion of the second chassis **140B** form a gantry **140** when the system is in the closed state. In some embodiments, at least part of the proximal portion of the first chassis **110** contacts at least a part of the proximal portion of the second chassis **120** when the system is in the closed state. In some embodiments, at least part of the first chassis **110** outside the proximal portion contacts at least a part of the second chassis **120** outside the proximal portion when the system is in the closed state. In some embodiments, the proximal portion of the first chassis **110** contacts at least a portion of the proximal portion of the second chassis **120** when the system is in the closed state. In some embodiments, the gantry **140** has a cross sectional shape comprising a circle, a triangle, a rectangle, a square, a polygon, or any combination thereof. In some embodiments, the gantry **140** is configured to couple to a dental cutting machine. In some embodiments, per **FIG. 2A****,** the gantry **140** comprises a coupling notch to couple the primary tooth clamping system **1000** to the dental cutting machine. In some embodiments, the first chassis **110,** the second chassis **120,** or both comprise the coupling notch **141.** Alternatively, in some embodiments, the gantry **140** comprises a pin, a snap, a magnet, a groove, a thread, or any combination thereof to couple to a dental cutting machine. Alternatively, in some embodiments, the first chassis **110,** the second chassis **120,** or both, comprise a pin, a snap, a magnet, a groove, a thread, or any combination thereof to couple to a dental cutting machine. In some embodiments, the dental cutting machine is an automated dental cutting machine.

In some embodiments, a surface of first chassis **110,** the second chassis **120,** or both, comprise a fiducial **150.** In some embodiments, the fiducial **150** enables an association between the chassis **100,** the cavity **130,** or both and the gantry **140.** In some embodiments, a surface of first chassis **110** and a surface of the second chassis **120** comprise the fiducial **150.** In some embodiments, a surface of first chassis **110,** the second chassis **120,** or both, comprise two or more fiducials **150**. Per **FIGS. 1A-2B****,** in some embodiments, the fiducial **150** is located between the gantry **140** and the cavity **130** on the first chassis **110,** the second chassis **120,** or both. In some embodiments, the fiducial **150** is placed proximal to the gantry **140** such that any flexing of the chassis **100** does not interfere with the association between the chassis **100,** the cavity **130,** or both and the gantry **140.** Further as shown, in some embodiments, the fiducial **150** is located on a mesial area the gantry **140** on of the first chassis **110,** the second chassis **120,** or both. In some embodiments, the position of the fiducial **150** the mesial area the gantry **140** on of the first chassis **110,** the second chassis **120,** or both, enables association between the chassis **100,** the cavity **130,** or both and the gantry **140** about a second plane. In some embodiments, the fiducial **150** is placed relative to the cavity **130,** the gantry **140,** or both with a set tolerance. In some embodiments, the fiducial **150** on the first chassis **110** is placed relative to the fiducial **150** on the second chassis **120** with a set tolerance. In some embodiments, the tolerance of the location of the fiducial **150** enables a more precise association between the chassis **100,** the cavity **130,** or both and the gantry **140** about a second plane.

In some embodiments, the cavity **130** is configured to receive an impression media **200.** In some embodiments, the cavity **130** is configured to receive the impression media **200,** when the primary tooth clamping system **1000** is in the closed state. In some embodiments, per **FIG. 2A**, an interior surface of the cavity **130** comprises a pin **112** to receive the impression media **200.** In some embodiments, the interior surface of the cavity **130** comprises 1, 2, 3, 4, 5, 6, 7, 8, 9, 10, 12, 14, 16, or more pins **112.** In some embodiments, a surface of the first chassis **110,** the second chassis **120** or both that define the cavity **130** comprises the pin **112.** Alternatively, in some embodiments, the cavity **130** comprises a groove, a slot, a cavity **130,** a surface texture, a clamp, or any combination thereof to receive the impression media **200.** In some embodiments, the pin **112,** the groove, the slot, the cavity **130,** the surface texture, the clamp, or any combination thereof prevent the impression media **200** from translating with respect to the cavity **130** during use. In some embodiments, the pin **112,** the groove, the slot, the cavity **130,** the surface texture, the clamp, or any combination thereof prevent the impression media **200** from translating with respect to the cavity **130** upon hardening.

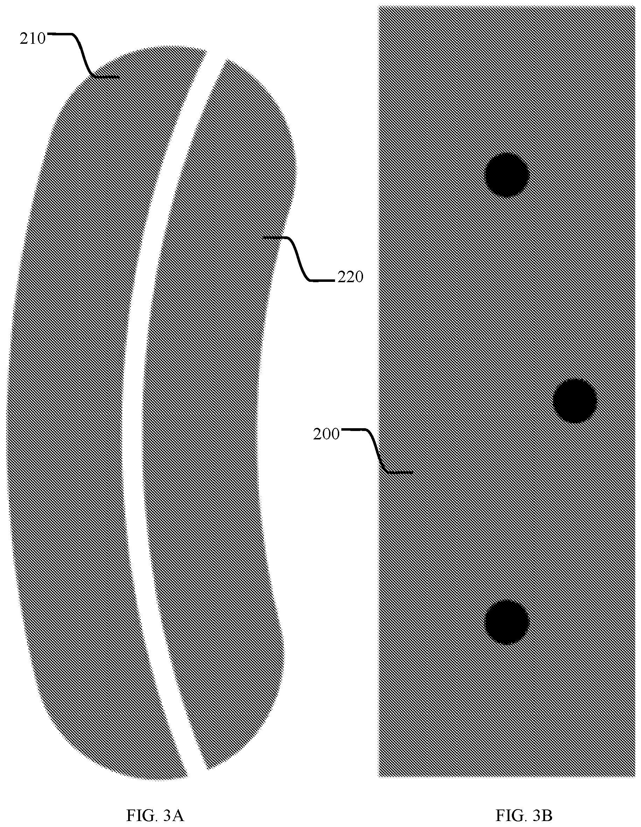

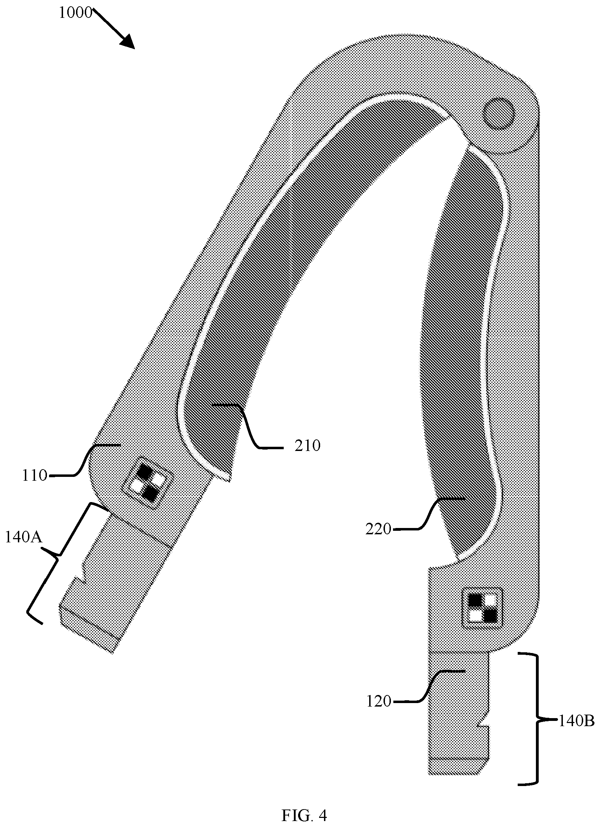

In some embodiments, per **FIGS. 3A** and **4****,** the impression media **200** comprises a primary impression media portion **210** and a secondary impression media portion **220.** Alternatively, in some embodiments, the impression media **200** comprises 3, 4, 5, 6, 7, 8, 9, 10, or more impression media **200** portions. In some embodiments, the cavity **130** receives the impression media **200** such that at least a portion of the primary impression media portion **210** contacts at least a portion of the secondary impression media portion **220.** In some embodiments, the cavity **130** receives the impression media **200** such that at least a portion of the primary impression media portion **210** is separated from at least a portion of the secondary impression media portion **220** In some embodiments, the first chassis **110** receives at least a portion of the primary impression media portion **210,** the secondary impression media portion **220,** or both. In some embodiments, the second chassis **120** receives at least a portion of the primary impression media portion **210,** the secondary impression media portion **220,** or both. In some embodiments, the first chassis **110** receives at most a portion of the primary impression media portion **210,** the secondary impression media portion **220,** or both. In some embodiments, the second chassis **120** receives at most a portion of the primary impression media portion **210,** the secondary impression media portion **220,** or both. In some embodiments, a volume of the primary impression media portion **210** is greater than a volume of the secondary impression media portion **220.** In some embodiments, a volume of the primary impression media portion **210** is less than a volume of the secondary impression media portion **220.** In some embodiments, a volume of the primary impression media portion **210** is approximately equal to a volume of the secondary impression media portion **220.** In some embodiments, at least one of the primary impression media portion **210** and the secondary impression media portion **220** has a prismatic shape.

In some embodiments, the impression media **200** is configured to form a direct impression of the one or more patient teeth **300.** In some embodiments, per **FIG. 5**, the impression media **200** is configured to form and maintain a shape of a direct impression of the one or more patient teeth **300.** In some embodiments, the impression material is polymer.

### Secondary Tooth Clamps and Tooth Clamp System

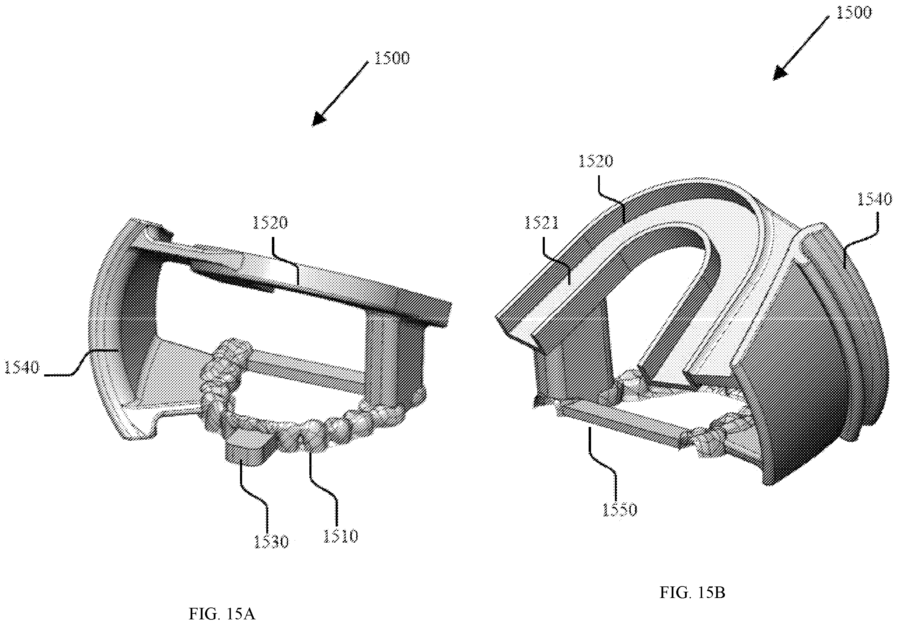

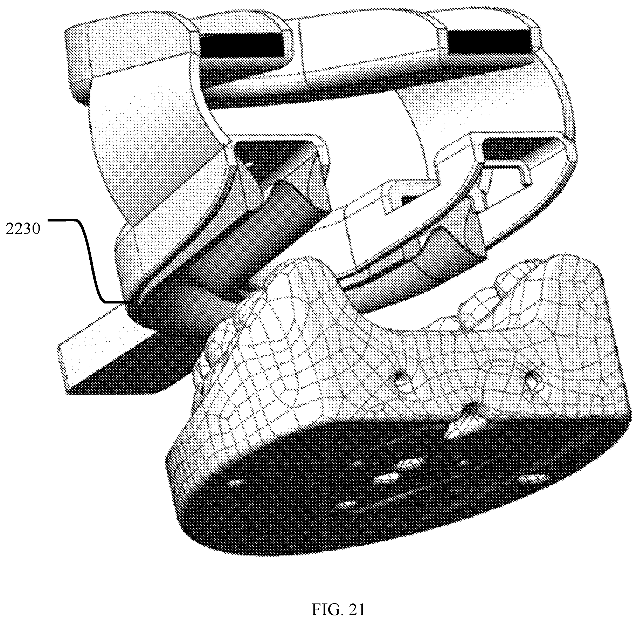

Another aspect provided herein, per **FIGS. 15A** and **15B****,** is a secondary tooth clamp **1500** for performing a dental procedure on a subject. In some embodiments, the secondary tooth clamp **1500** comprises a first arch segment **1510,** a second arch segment **1520,** a cheek retracting surface **1540,** and a coupling mechanism **1530.** In some embodiments, the first arch segment **1510** is an maxillary arch segment and wherein the second arch segment **1520** is a mandibular arch segment. In some embodiments, the first arch segment **1510** is a mandibular arch segment and wherein the second arch segment **1520** is an maxillary arch segment. In some embodiments, the secondary tooth clamp **1500** further comprises a tongue blocking portion **1550.** In some embodiments, the tongue blocking portion **1550** positions the subjects tongue in such a way to prevent debris impact during operation on a tooth. In some embodiments, the tongue blocking portion **1550** extends from at least a portion of the first arch segment **1510,** at least a portion of the second arch segment **1520,** or both. In some embodiments, per **FIG. 21**, the secondary tooth clamp **1500** further comprises a gasket **2310** coupled to at least a portion of the first arch segment **1510.** In some embodiments, the gasket **2310** is configured to suction the secondary tooth clamp **1500** to the tooth of the subject. In some embodiments, the secondary tooth clamp **1500** is formed by 3D printing, injection molding, or both. In some embodiments, the secondary tooth clamp **1500** further comprises an indicator that the first arch segment **1510** has fully coupled to the first row of teeth of the subject.

In some embodiments, at least a portion of the first arch segment **1510** comprises a negative imprint. In some embodiments, at least a portion of the first arch segment **1510** comprises a negative imprint corresponding with at least a portion of a first row of teeth of the subject. In some embodiments, the negative imprint of the tooth of the subject is determined based on a dental arch anatomy scan. In some embodiments, the first arch segment **1510** has a procedure access opening therethrough. In some embodiments, a wall of the procedure access opening is shaped based on negative imprint of a treatment tooth of the subject. In some embodiments, the procedure access opening comprises a primary procedure access opening proximal to tooth of the subject and a secondary procedure access opening proximal to tooth of the subject. In some embodiments, a wall of the primary procedure access opening is shaped based on negative imprint of a treatment tooth of the subject. In some embodiments, the secondary procedure access opening has a width, length, or both greater than a width, length, or both of the primary procedure access. In some embodiments, at least a portion of the first arch segment **1510** is removable from another portion of the first arch segment **1510.**

In some embodiments, the second arch segment **1520** engages at least a portion of a second row of teeth of the subject opposite the first row of teeth. In some embodiments, the second arch segment **1520** comprises an arcuate channel. In some embodiments, the arcuate channel provides a surface for the subject to rest a maxillary arch or a mandibular arch of a subject. In some embodiments, the arcuate channel provides a surface for the subject to an arch opposing the tooth to be operated on. In some embodiments, at least a portion of the arcuate channel is padded.

In some embodiments, the cheek retracting surface **1540** is coupled to at least a portion of the first arch segment **1510,** at least a portion of the second arch segment **1520,** or both. As shown, the cheek retracting surface **1540** is non-interrupted. As shown, the cheek retracting surface **1540** is cylindrical. Alternatively, in some embodiments, the cheek retracting surface **1540** has one or more holes therethrough. Alternatively, in some embodiments, the cheek retracting surface **1540** is cylindrical or conical. Further, as shown the cheek retracting surface **1540** comprises a protrusion configured to contact at least a portion of the lip of the subject.

In some embodiments, the coupling mechanism **1530** extends from at least a portion of the first arch segment **1510,** at least a portion of the second arch segment **1520,** or both. In some embodiments, the coupling mechanism **1530** extends from a mesial portion of the first arch segment **1510,** a mesial portion of the second arch segment **1520,** or both. In some embodiments, the coupling mechanism **1530** couples to a dental cutting machine. In some embodiments, the coupling mechanism **1530** further comprises a fiducial. In some embodiments, the coupling mechanism **1530** is a rigid coupling mechanism **1530.** In some embodiments, the coupling mechanism **1530** comprises a pin, a threaded feature, a clip, a magnet, a nut, a bolt, a catch, a clasp, or any combination thereof.

Another aspect provided herein is a secondary tooth clamp **1500** system for performing a dental procedure on a subject, the tooth clamp system comprising the secondary tooth clamp **1500** herein, and a gum support. In some embodiments, the gum support is coupled to at least a portion of the first arch segment **1510** of the tooth clamp, at least a portion of the second arch segment **1520** of the tooth clamp, or both.

### Tertiary Tooth Clamp System

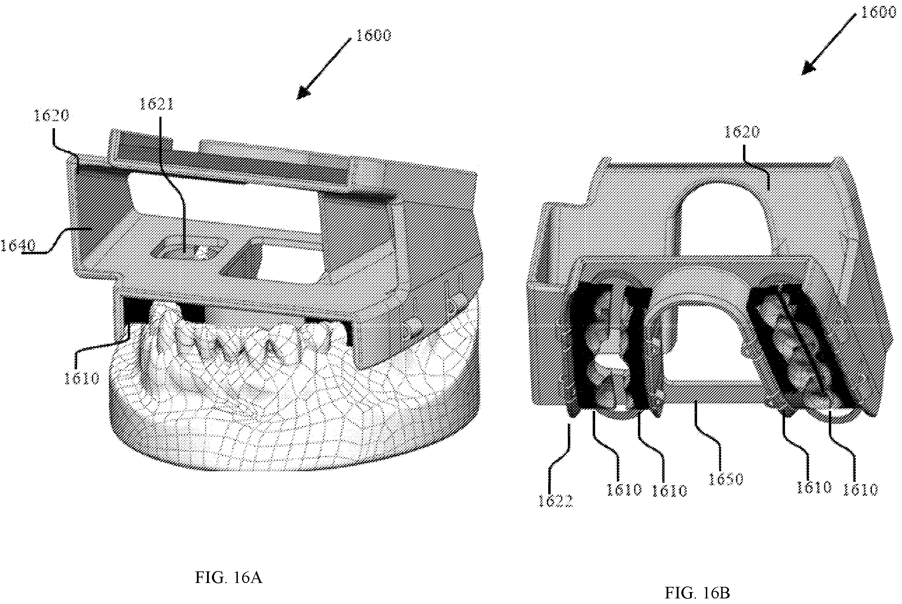

Another aspect provided herein, per **FIGS. 16A** and **16B****,** is a tertiary tooth clamp system **1600** for performing a dental procedure on a subject. In some embodiments, the tertiary tooth clamp system **1600** comprises a clamp insert **1610** and a clamp frame **1620.** In some embodiments, the tertiary tooth clamp system **1600** comprises 1, 2, 3, 4, or more clamp inserts **1610.** In some embodiments, two or more of the clamp inserts **1610** have different elasticity, pliability, ductility, or any combination thereof.

In some embodiments, the clamp insert **1610,** the clamp frame **1620,** or both are formed by 3D printing, injection molding, or both. In some embodiments, the clamp insert **1610,** the clamp frame **1620,** or both, is reusable. In some embodiments, the clamp insert **1610,** the clamp frame **1620,** or both, is formed of a rigid material. In some embodiments, the clamp insert **1610,** the clamp frame **1620,** or both, is formed of an at least partially compliant material. In some embodiments, as shown, the tertiary tooth clamp system **1600** comprises a first clamp insert **1610** for two or more teeth on the subject's left side and a second clamp insert **1610** for two or more teeth on the subject's right side. In some embodiments, as shown, the clamp insert **1610** has a mesial portion and a distal portion, wherein the mesial and distal portions are interconnected. In some embodiments, the mesial and distal portions are interconnected by a flexible member. In some embodiments, the mesial and distal portions are separate and distinct. In some embodiments, the mesial and distal portions are rigidly connected.

In some embodiments, the clamp insert **1610** has one or more interior surfaces. In some embodiments, at least a portion of the one or more interior surfaces is shaped with a negative imprint of a tooth of the subject. In some embodiments, the negative imprint of the tooth of the subject is determined based on a dental arch anatomy scan.

In some embodiments, the clamp frame **1620** comprises a clamp insert coupling **1622,** a cheek retracting surface, a second arch segment, and a coupling mechanism. In some embodiments, the clamp frame **1620** further comprises a tongue blocking portion **1650** extending from at least a portion of the first arch segment, at least a portion of the second arch segment, or both. In some embodiments, the clamp frame **1620** further comprises an indicator that the first arch segment has fully coupled to the first row of teeth of the subject. As shown, the cheek retracting surface **1640** is cylindrical. Alternatively, in some embodiments, the cheek retracting surface **1640** has one or more holes therethrough. Alternatively, in some embodiments, the cheek retracting surface **1640** is cylindrical or conical. Further, as shown the cheek retracting surface **1640** comprises a protrusion configured to contact at least a portion of the lip of the subject. In some embodiments, the first arch segment has a procedure access opening **1621** therethrough.

In some embodiments, a clamp insert coupling **1622** receives the clamp insert **1610.** In some embodiments, the clamp insert **1610** comprises a compressible portion. In some embodiments, the second arch segment comprises an arcuate channel. In some embodiments, the second arch segment is a mandibular arch segment. In some embodiments, the second arch segment is an maxillary arch segment. In some embodiments, the arcuate channel provides a surface for the subject to rest a maxillary arch or a mandibular arch of a subject. In some embodiments, the arcuate channel provides a surface for the subject to an arch opposing the tooth to be operated on. In some embodiments, at least a portion of the arcuate channel is padded.

In some embodiments, the coupling mechanism removably couples the clamp frame **1620** to a dental cutting machine. In some embodiments, the coupling mechanism further comprises a fiducial. In some embodiments, the coupling mechanism is a rigid coupling mechanism. In some embodiments, the coupling mechanism comprises a pin, a threaded feature, a clip, a magnet, a nut, a bolt, a catch, a clasp, or any combination thereof.

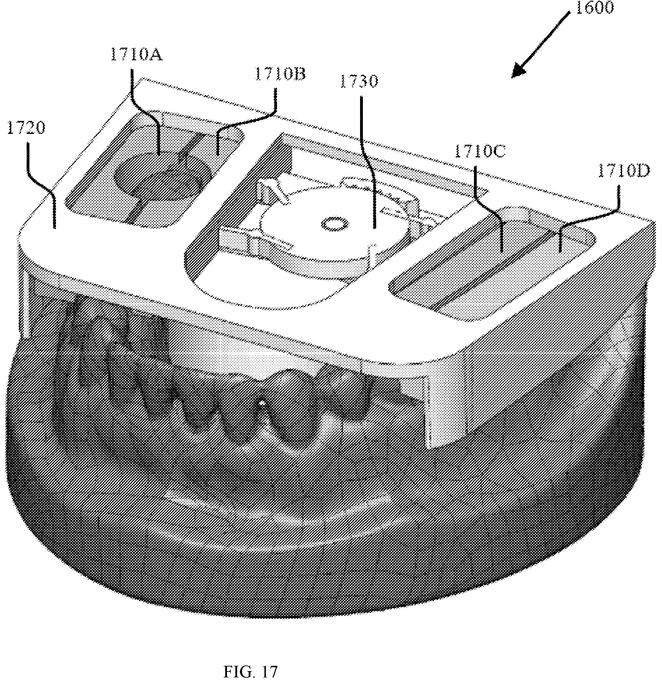

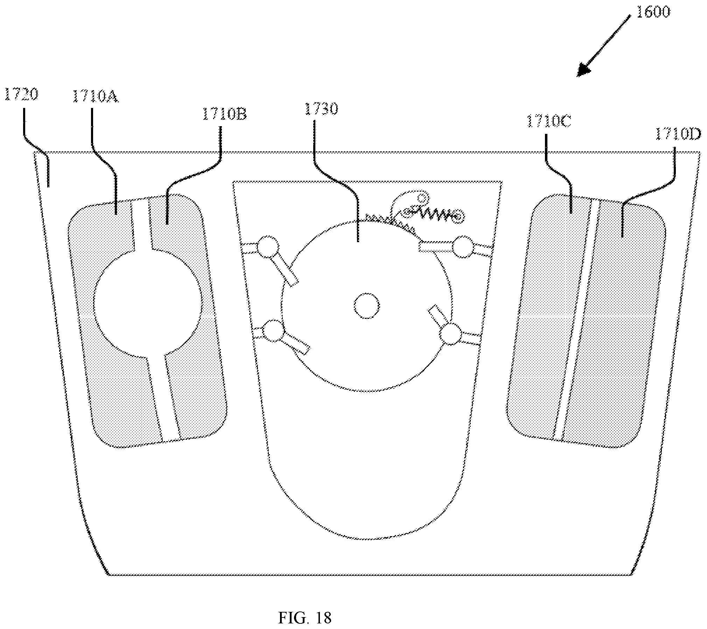

In some embodiments, per **FIGS. 17** and **18****,** the tertiary tooth clamp system **1600** further comprises a tightening mechanism **1730** compressing the compressible portion to clamp the tertiary tooth clamp system **1600** to the tooth of a subject. In some embodiments, the tightening mechanism **1730** comprises a cam, a slide, a wedge, a gear, a pulley, a worm drive, a bar linkage, a ratchet, a spring, a lever a spring, or any combination thereof. In some embodiments, the tertiary tooth clamp system **1600** further comprises a gum support removably coupled to the clamp frame **1620.** In some embodiments, the tertiary tooth clamp system **1600** comprises a first clamp insert **1710A,** a second clamp insert **1710B,** a third clamp insert **1710C,** and a fourth clamp insert **1710D.** In some embodiments, two or more of the first clamp insert **1710A,** the second clamp insert **1710B,** the third clamp insert **1710C,** and the fourth clamp insert **1710D** have different elasticity, pliability, ductility, or any combination thereof. In some embodiments, as shown, the third clamp insert **1710C** and the fourth clamp insert **1710D** have a higher elasticity, pliability, ductility, or any combination thereof than the first clamp insert **1710A** and the second clamp insert **1710B.**

### Quaternary Tooth Clamp System

Another aspect provided herein is a quaternary tooth clamp system **1900** for performing a dental procedure on a subject. In some embodiments, the quaternary tooth clamp system **1900** comprises a clamp frame **1910,** and a spring clip **1920.** In some embodiments, the clamp system further comprises an impression material in the clamp frame **1910.**

In some embodiments, the clamp frame **1910** comprises a first arch segment, a coupling mechanism **1911,** and a first spring clip fastener **1912.** In some embodiments, as shown, the clamp frame **1910** comprises three first spring clip fasteners **1912.** Alternatively, in some embodiments the clamp frame **1910** comprises 1, 2, 3, 4, 5, 6, 7, 8, 9, 10, or more first spring clip fasteners **1912.** In some embodiments, the clamp frame **1910** is formed by 3D printing, injection molding, or both. In some embodiments, the clamp frame **1910** further comprises a tongue blocking portion extending from at least a portion of the first arch segment. In some embodiments, per **FIG. 21**, the clamp frame **1910** further comprises a gasket **2310** coupled to at least a portion of the arch overlay surface. In some embodiments, the gasket **2310** is configured to suction the tooth clamp to the tooth of the subject.

In some embodiments, the first arch segment comprises a procedure access cavity therethrough. In some embodiments, at least a portion of the first arch segment comprises a negative imprint of a tooth of the subject. In some embodiments, the first arch segment is an maxillary arch segment. In some embodiments, the first arch segment is a mandibular arch segment.

In some embodiments, the coupling mechanism **1911** extends from at least a portion of the first arch segment. In some embodiments, the coupling mechanism **1911** couples to a dental cutting machine. In some embodiments, the coupling mechanism **1911** further comprises a fiducial. In some embodiments, the coupling mechanism **1911** is a rigid coupling mechanism **1911.** In some embodiments, the coupling mechanism **1911** comprises a pin, a threaded feature, a clip, a magnet, a nut, a bolt, a catch, a clasp, or any combination thereof.

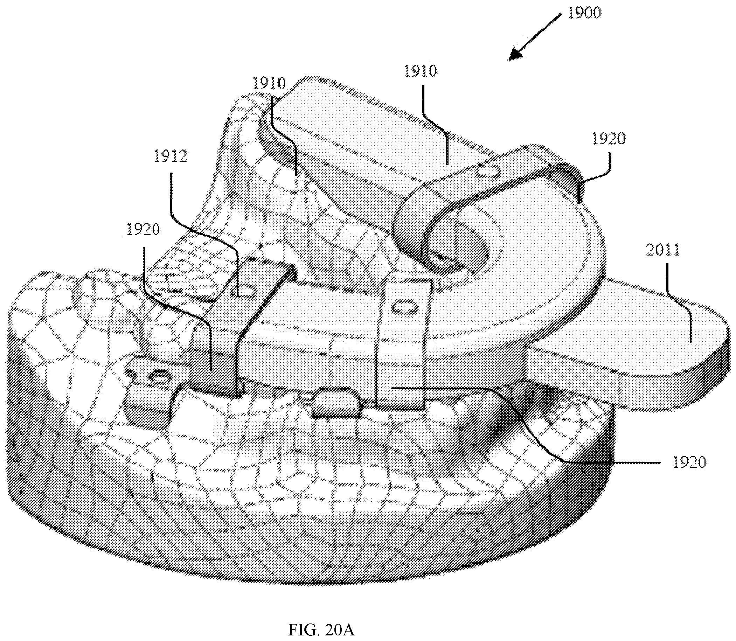

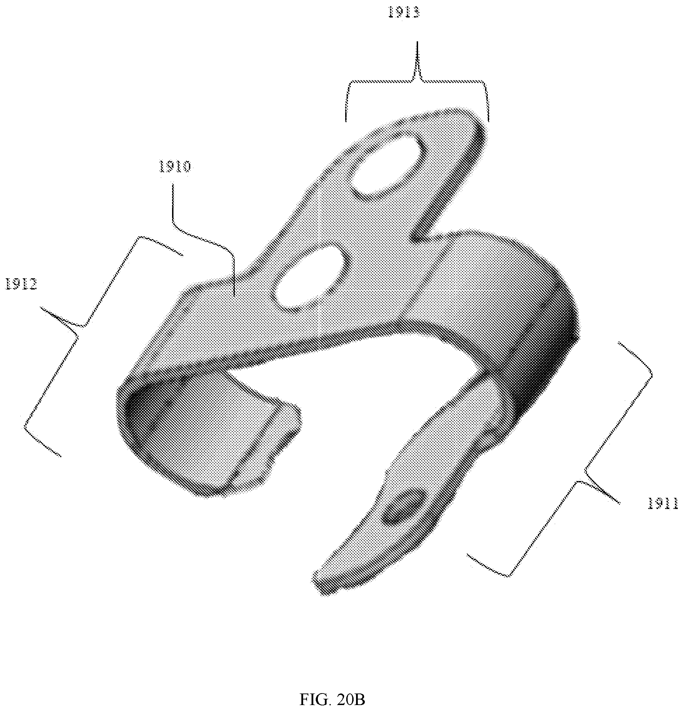

In some embodiments, per **FIG. 20B**, the spring clip **1920** comprises a first clip segment 1911, a second clip segment **1912,** and a third clip segment **1913.** In some embodiments, the spring clip **1920** is configured to removably couple to the clamp frame **1910.** In some embodiments, at least a portion of the distal edge of the first clip segment **1911** has a concave shape. In some embodiments, at least a portion distal edge of the second clip segment **1912** has a concave shape. In some embodiments, the third clip segment **1913** is between the first clip segment **1911** and the second clip segment **1912.** In some embodiments, the third clip segment **1913** comprises a second spring clip fastener **1914** that removably couples to the first spring clip fastener **1912.** In some embodiments, as shown, the third clip segment **1913** comprises one second spring clip fastener **1914.** Alternatively in some embodiments, the third clip segment **1913** comprises 1, 2, 3, 4, 5, 6, or more second spring clip fasteners **1914.**

### Method for Performing a Dental Procedure

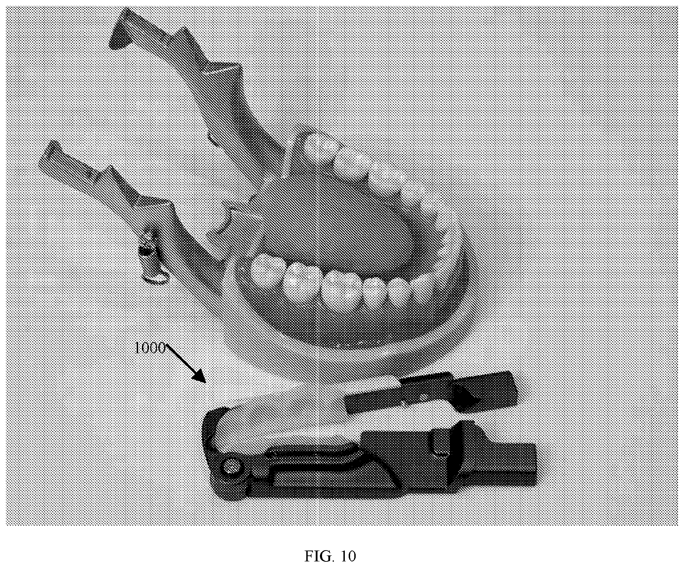

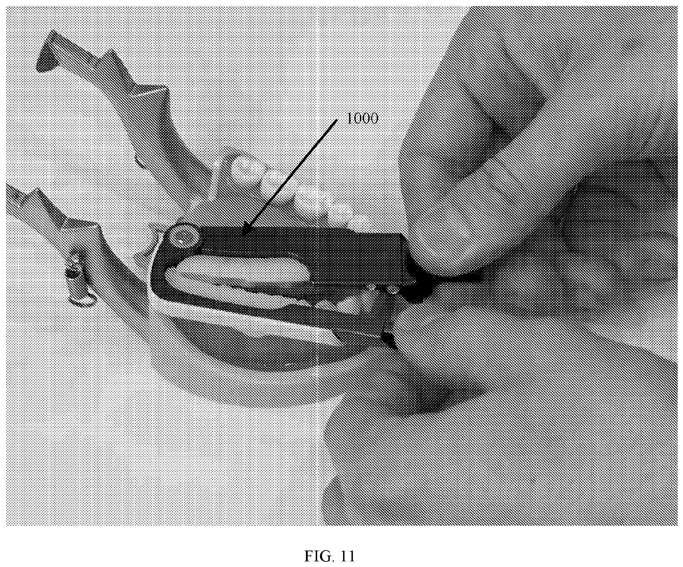

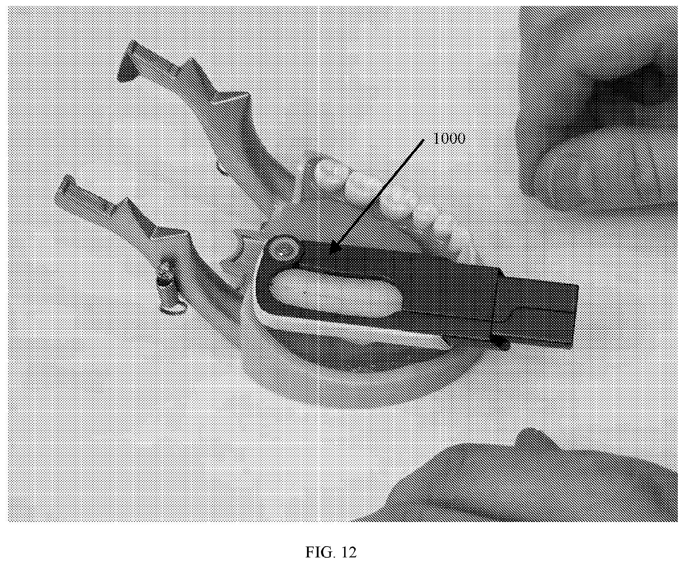

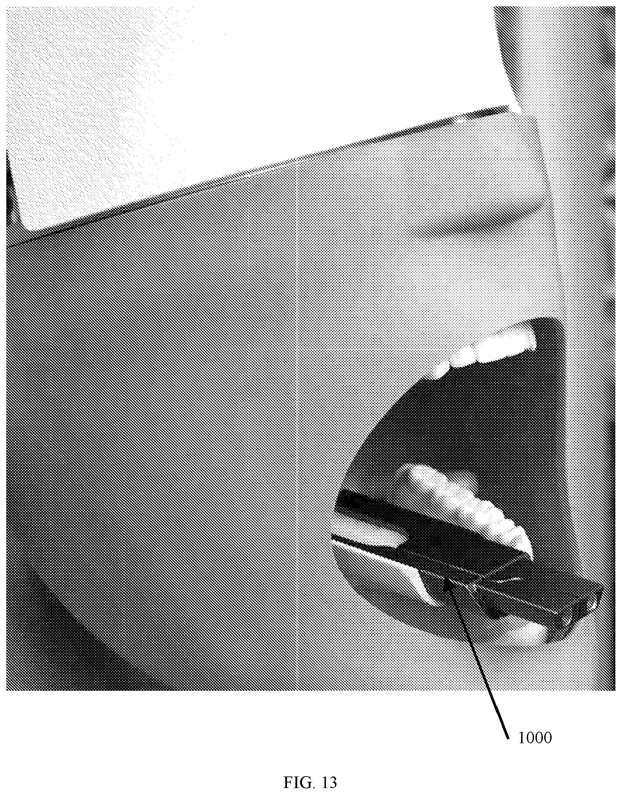

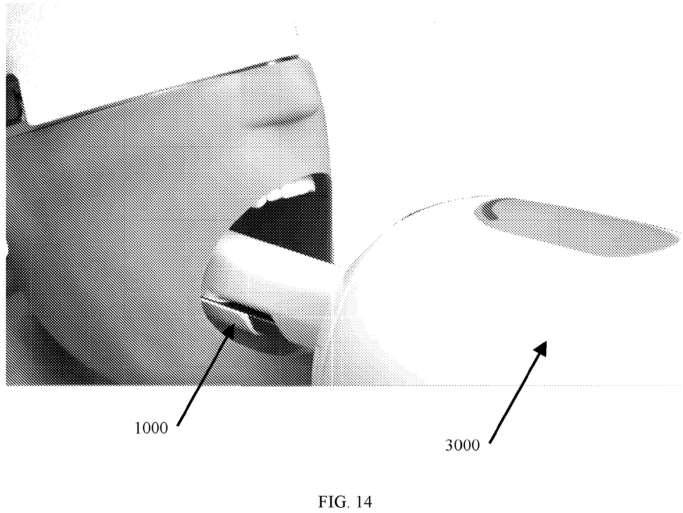

Another aspect provided herein, per **FIGS. 10-14** is a method for performing a dental procedure. In some embodiments, the method comprises: providing the tooth **300** clamping system **1000** herein, per **FIG. 10**; performing a dental arch anatomy scan of a patient; inserting the primary impression media portion **210** and the secondary impression media portion **220** into the cavity **130;** installing the system into the mouth of the patient by clamping two or more teeth **300** of the patient between at least a portion of the primary impression media portion **210** and the secondary impression media portion **220** until the system is in the closed state, per **FIGS. 11** and **12****;** removing the system from the mouth of the patient once the primary impression media portion **210** and the secondary impression media portion **220** have hardened; performing an impression scan of the fiducial **150** and one or more surfaces of the primary impression media portion **210** and the secondary impression media portion **220;** overlaying the dental arch anatomy scan and the impression scan to form an overlaid model; determining a cut path based on the overlaid model; reinstalling the system into the mouth of the patient, per **FIG. 13**; coupling the gantry **140** to a dental cutting machine **3000,** per **FIG. 14**; and cutting at least a portion of one or more of the two or more teeth **300** of the patient, based on the cut path.

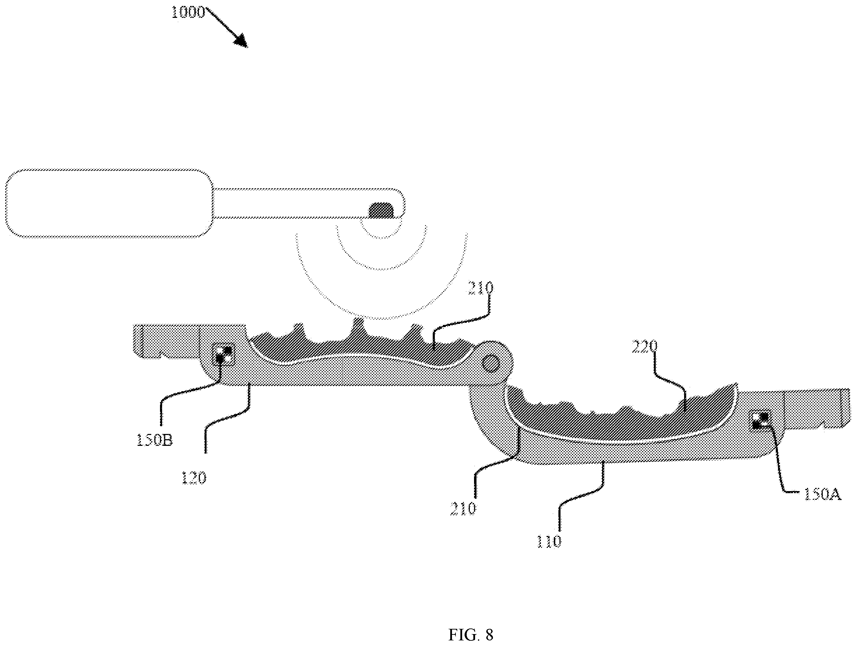

In some embodiments, per **FIG. 8**, the dental arch anatomy scan, the impression scan, or both is performed by any two-dimensional or three-dimensional scanner. In some embodiments, performing the impression scan comprises forming a three dimensional relationship between fiducial **150** and the one or more surfaces of the primary impression media portion **210** and the secondary impression media portion **220.** In some embodiments, performing the impression scan comprises forming a three dimensional relationship between a primary fiducial **150A** on the first chassis **110,** a secondary fiducial **150B** on the second chassis **120,** and the one or more surfaces of the primary impression media portion **210** and the secondary impression media portion **220.** In some embodiments, the method further comprises inserting 3, 4, 5, 6, 7, 8, 9, 10 or more impression media **200** portions into the cavity **130.** In some embodiments, installing the system into the mouth of the patient is performed by a caregiver, a dental cutting machine **3000** or both. In some embodiments, removing the system from the mouth of the patient is performed by a caregiver, a dental cutting machine **3000** or both. In some embodiments, the dental arch anatomy scan is overlaid with the impression scan based on the three dimensional relationship between the fiducial **150** and the one or more surfaces of the primary impression media portion **210** and the secondary impression media portion **220.**

In some embodiments, performing of the impression scan of the fiducial **150** and one or more surfaces of the primary impression media portion **210** and the secondary impression media portion **220,** determining the three dimensional relationship between the fiducial **150** and the one or more surfaces of the primary impression media portion **210** and the secondary impression media portion **220,** overlaying the dental arch anatomy scan and the impression scan to form an overlaid model, or any combination thereof enable the determination of the cut path with greater accuracy. In some embodiments, reinstalling the system into the mouth of the patient is performed by a caregiver, a dental cutting machine **3000** or both. In some embodiments, cutting the teeth **300** by the dental cutting machine **3000** comprises cutting the teeth with a drill, with a waterjet, with a laser, with a saw, or any combination thereof. In some embodiments, the dental cutting machine **3000** is an automated dental cutting machine. In some embodiments, the dental arch anatomy scan, the impression scan, or both have a set resolution. As such, the components, features, method steps, or any combination thereof herein enable dental treatments with higher accuracy by ensuring that a relationship between a location on a tooth to the fiducial, between the fiducial and the cut path, or both are fully determined and accounted for.

### Kit for Performing a Dental Procedure

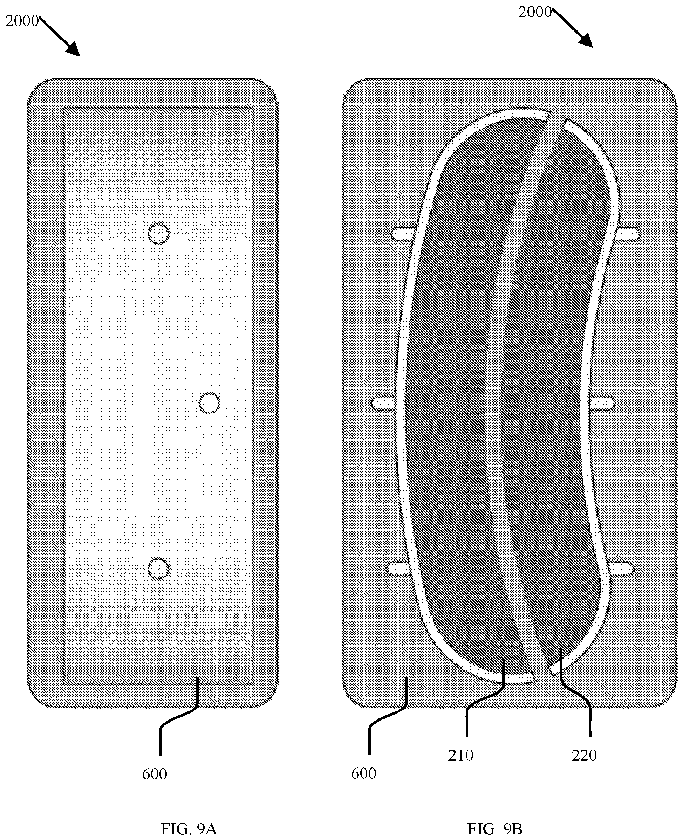

Another aspect provided herein is a kit **2000** for performing a dental procedure. In some embodiments, the kit comprises the tooth clamping system provided herein and a packaging **600** for the primary impression media portion, the secondary impression media portion, or both. **FIGS. 9A** and **9B** show an exemplary packaging **600.** In some embodiments, the packaging **2000** separates at least a portion of the primary impression media portion **210** from the secondary impression media portion **220.** In some embodiments, the packaging **600** prevents the primary impression media portion **210,** the secondary impression media portion **220,** or both from hardening during storage and/or transit. In some embodiments, the kit **2000** further comprises an instruction manual.

### Dental Cutting Machine

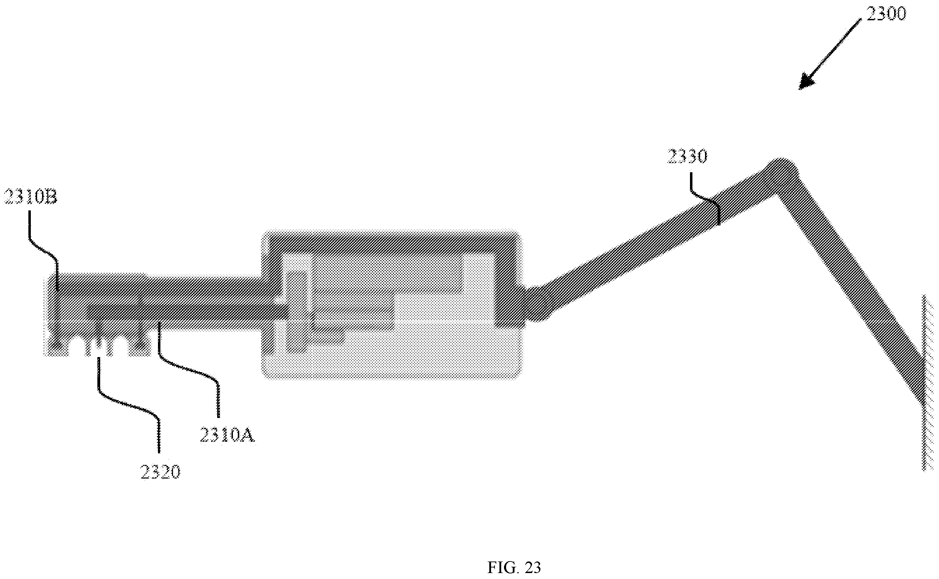

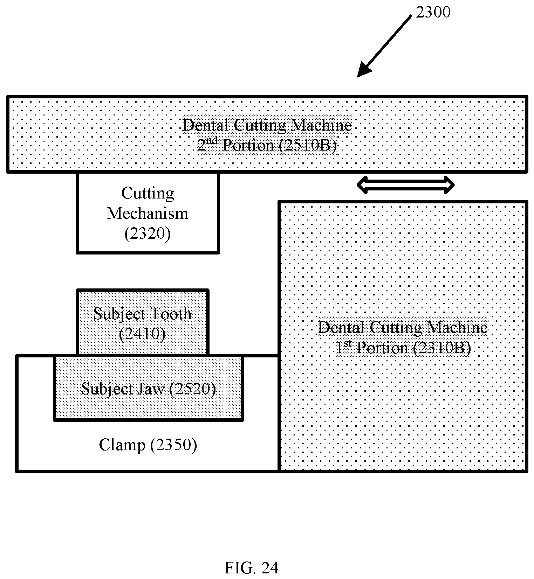

In some embodiments, per **FIGS. 23** and **24****,** the tooth clamping systems herein are configured to couple to, and be used in parallel, with a dental cutting machine **2300.** In some embodiments, the dental cutting machine **2300** comprises a robotic system, a computer controlled system, or both.

In some embodiments, the dental cutting machine **2300** comprises a first portion **2310A** and a second portion **2310B.** In some embodiments, the second portion **2310B** translates and/or rotates in one or more directions with respect to the first portion **2310A.** In some embodiments, the first portion of the dental cutting machine **2310A** couples to the clamps **2350** provided herein, which attach to a jaw of a subject **2410.** In some embodiments, the second portion of the dental cutting machine **2320** moves relative to the first portion **2310** to perform the dental procedure on the subject's tooth **2410** with a cutting mechanism **2320.** In some embodiments, the dental cutting machine **2300** is mounted to a rigid base, a wall, a cart, or any combination thereof. In some embodiments, the dental cutting machine **2300** is mounted to a rigid base, a wall, a cart, or any combination thereof by a translatable arm **2340.** In some embodiments, the dental cutting machine **2300** comprises a three-dimensional scanner. In some embodiments, the tooth clamp systems herein ensure precision of dental procedures by preventing or reducing relative movement between the subject and the first portion of the dental cutting machine **2310.**

### Terms and Definitions

Unless otherwise defined, all technical terms used herein have the same meaning as commonly understood by one of ordinary skill in the art to which this disclosure belongs.

As used herein, the singular forms "a," "an," and "the" include plural references unless the context clearly dictates otherwise. Any reference to "or" herein is intended to encompass "and/or" unless otherwise stated.

As used herein, the term "about" in some cases refers to an amount that is approximately the stated amount.

As used herein, the term "about" refers to an amount that is near the stated amount by 10%, 5%, or 1%, including increments therein.

As used herein, the term "about" in reference to a percentage refers to an amount that is greater or less the stated percentage by 10%, 5%, or 1%, including increments therein.

As used herein, the phrases "at least one", "one or more", and "and/or" are open-ended expressions that are both conjunctive and disjunctive in operation. For example, each of the expressions "at least one of A, B and C", "at least one of A, B, or C", "one or more of A, B, and C", "one or more of A, B, or C" and "A, B, and/or C" means A alone, B alone, C alone, A and B together, A and C together, B and C together, or A, B and C together.

### Computing System

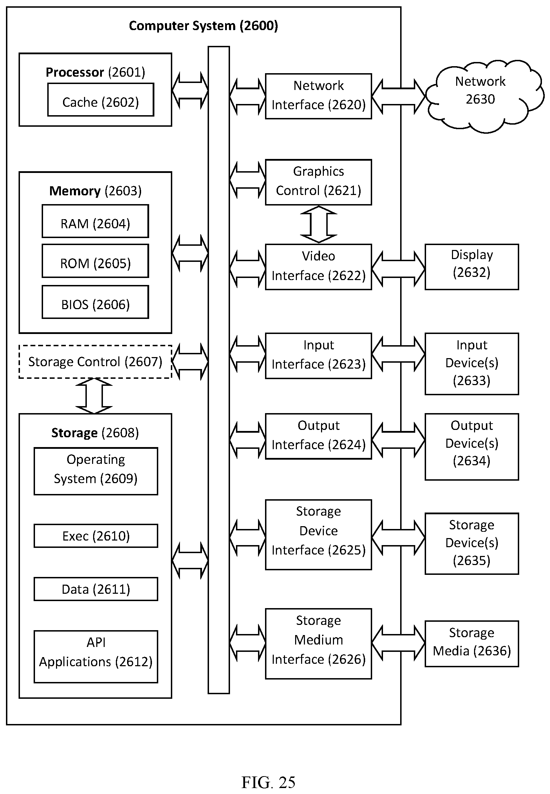

Referring to **FIG. 25****,** a block diagram is shown depicting an exemplary machine that includes a computer system **2500** (e.g., a processing or computing system) within which a set of instructions can execute for causing a device to perform or execute any one or more of the aspects and/or methodologies for static code scheduling of the present disclosure. The components in **FIG. 25** are examples only and do not limit the scope of use or functionality of any hardware, software, embedded logic component, or a combination of two or more such components implementing particular embodiments.

Computer system **2500** may include one or more processors **2501,** a memory **2503,** and a storage **2508** that communicate with each other, and with other components, via a bus **2540.** The bus **2540** may also link a display **2532,** one or more input devices **2533** (which may, for example, include a keypad, a keyboard, a mouse, a stylus, etc.), one or more output devices **2534,** one or more storage devices **2535,** and various tangible storage media **2536.** All of these elements may interface directly or via one or more interfaces or adaptors to the bus **2540.** For instance, the various tangible storage media **2536** can interface with the bus **2540** via storage medium interface **2526.** Computer system **2500** may have any suitable physical form, including but not limited to one or more integrated circuits (ICs), printed circuit boards (PCBs), mobile handheld devices (such as mobile telephones or PDAs), laptop or notebook computers, distributed computer systems, computing grids, or servers.

Computer system **2500** includes one or more processor(s) **2501** (e.g., central processing units (CPUs) or general purpose graphics processing units (GPGPUs)) that carry out functions. Processor(s) **2501** optionally contains a cache memory unit **2502** for temporary local storage of instructions, data, or computer addresses. Processor(s) **2501** are configured to assist in execution of computer readable instructions. Computer system **2500** may provide functionality for the components depicted in **FIG. 25** as a result of the processor(s) **2501** executing non-transitory, processor-executable instructions embodied in one or more tangible computer-readable storage media, such as memory **2503,** storage **2508,** storage devices **2535,** and/or storage medium **2536.** The computer-readable media may store software that implements particular embodiments, and processor(s) **2501** may execute the software. Memory **2503** may read the software from one or more other computer-readable media (such as mass storage device(s) **2535, 2536**) or from one or more other sources through a suitable interface, such as network interface **2520.** The software may cause processor(s) **2501** to carry out one or more processes or one or more steps of one or more processes described or illustrated herein. Carrying out such processes or steps may include defining data structures stored in memory **2503** and modifying the data structures as directed by the software.

The memory **2503** may include various components (e.g., machine readable media) including, but not limited to, a random access memory component (e.g., RAM **2504**) (e.g., static RAM (SRAM), dynamic RAM (DRAM), ferroelectric random access memory (FRAM), phase-change random access memory (PRAM), etc.), a read-only memory component (e.g., ROM **2505**), and any combinations thereof. ROM **2505** may act to communicate data and instructions unidirectionally to processor(s) **2501,** and RAM **2504** may act to communicate data and instructions bidirectionally with processor(s) **2501.** ROM **2505** and RAM **2504** may include any suitable tangible computer-readable media described below. In one example, a basic input/output system **2506** (BIOS), including basic routines that help to transfer information between elements within computer system **2500,** such as during start-up, may be stored in the memory **2503.**

Fixed storage **2508** is connected bidirectionally to processor(s) **2501,** optionally through storage control unit **2507.** Fixed storage **2508** provides additional data storage capacity and may also include any suitable tangible computer-readable media described herein. Storage **2508** may be used to store operating system **2509,** executable(s) **2510,** data **2511,** applications **2512** (application programs), and the like. Storage **2508** can also include an optical disk drive, a solid-state memory device (e.g., flash-based systems), or a combination of any of the above. Information in storage **2508** may, in appropriate cases, be incorporated as virtual memory in memory **2503.**

In one example, storage device(s) **2535** may be removably interfaced with computer system **2500** (e.g., via an external port connector (not shown)) via a storage device interface **2525.** Particularly, storage device(s) **2535** and an associated machine-readable medium may provide non-volatile and/or volatile storage of machine-readable instructions, data structures, program modules, and/or other data for the computer system **2500.** In one example, software may reside, completely or partially, within a machine-readable medium on storage device(s) **2535.** In another example, software may reside, completely or partially, within processor(s) **2501.**

Bus **2540** connects a wide variety of subsystems. Herein, reference to a bus may encompass one or more digital signal lines serving a common function, where appropriate. Bus **2540** may be any of several types of bus structures including, but not limited to, a memory bus, a memory controller, a peripheral bus, a local bus, and any combinations thereof, using any of a variety of bus architectures. As an example and not by way of limitation, such architectures include an Industry Standard Architecture (ISA) bus, an Enhanced ISA (EISA) bus, a Micro Channel Architecture (MCA) bus, a Video Electronics Standards Association local bus (VLB), a Peripheral Component Interconnect (PCI) bus, a PCI-Express (PCI-X) bus, an Accelerated Graphics Port (AGP) bus, HyperTransport (HTX) bus, serial advanced technology attachment (SATA) bus, and any combinations thereof.

Computer system **2500** may also include an input device **2533.** In one example, a user of computer system **2500** may enter commands and/or other information into computer system **2500** via input device(s) **2533.** Examples of an input device(s) **2533** include, but are not limited to, an alpha-numeric input device (e.g., a keyboard), a pointing device (e.g., a mouse or touchpad), a touchpad, a touch screen, a multi-touch screen, a joystick, a stylus, a gamepad, an audio input device (e.g., a microphone, a voice response system, etc.), an optical scanner, a video or still image capture device (e.g., a camera), and any combinations thereof. In some embodiments, the input device is a Kinect, Leap Motion, or the like. Input device(s) **2533** may be interfaced to bus **2540** via any of a variety of input interfaces **2523** (e.g., input interface **2523**) including, but not limited to, serial, parallel, game port, USB, FIREWIRE, THUNDERBOLT, or any combination of the above.

In particular embodiments, when computer system **2500** is connected to network **2530,** computer system **2500** may communicate with other devices, specifically mobile devices and enterprise systems, distributed computing systems, cloud storage systems, cloud computing systems, and the like, connected to network **2530.** Communications to and from computer system **2500** may be sent through network interface **2520.** For example, network interface **2520** may receive incoming communications (such as requests or responses from other devices) in the form of one or more packets (such as Internet Protocol (IP) packets) from network **2530,** and computer system **2500** may store the incoming communications in memory **2503** for processing. Computer system **2500** may similarly store outgoing communications (such as requests or responses to other devices) in the form of one or more packets in memory **2503** and communicated to network **2530** from network interface **2520.** Processor(s) **2501** may access these communication packets stored in memory **2503** for processing.

Examples of the network interface **2520** include, but are not limited to, a network interface card, a modem, and any combination thereof. Examples of a network **2530** or network segment **2530** include, but are not limited to, a distributed computing system, a cloud computing system, a wide area network (WAN) (e.g., the Internet, an enterprise network), a local area network (LAN) (e.g., a network associated with an office, a building, a campus or other relatively small geographic space), a telephone network, a direct connection between two computing devices, a peer-to-peer network, and any combinations thereof. A network, such as network **2530,** may employ a wired and/or a wireless mode of communication. In general, any network topology may be used.

Information and data can be displayed through a display **2532.** Examples of a display **2532** include, but are not limited to, a cathode ray tube (CRT), a liquid crystal display (LCD), a thin film transistor liquid crystal display (TFT-LCD), an organic liquid crystal display (OLED) such as a passive-matrix OLED (PMOLED) or active-matrix OLED (AMOLED) display, a plasma display, and any combinations thereof. The display **2532** can interface to the processor(s) **2501,** memory **2503,** and fixed storage **2508,** as well as other devices, such as input device(s) **2533,** via the bus **2540.** The display **2532** is linked to the bus **2540** via a video interface **2522,** and transport of data between the display **2532** and the bus **2540** can be controlled via the graphics control **2521.** In some embodiments, the display is a video projector. In some embodiments, the display is a head-mounted display (HMD) such as a VR headset. In further embodiments, suitable VR headsets include, by way of non-limiting examples, HTC Vive, Oculus Rift, Samsung Gear VR, Microsoft HoloLens, Razer OSVR, FOVE VR, Zeiss VR One, Avegant Glyph, Freefly VR headset, and the like. In still further embodiments, the display is a combination of devices such as those disclosed herein.

In addition to a display **2532,** computer system **2500** may include one or more other peripheral output devices **2534** including, but not limited to, an audio speaker, a printer, a storage device, and any combinations thereof. Such peripheral output devices may be connected to the bus **2540** via an output interface **2524.** Examples of an output interface **2524** include, but are not limited to, a serial port, a parallel connection, a USB port, a FIREWIRE port, a THUNDERBOLT port, and any combinations thereof.

In addition or as an alternative, computer system **2500** may provide functionality as a result of logic hardwired or otherwise embodied in a circuit, which may operate in place of or together with software to execute one or more processes or one or more steps of one or more processes described or illustrated herein. Reference to software in this disclosure may encompass logic, and reference to logic may encompass software. Moreover, reference to a computer-readable medium may encompass a circuit (such as an IC) storing software for execution, a circuit embodying logic for execution, or both, where appropriate. The present disclosure encompasses any suitable combination of hardware, software, or both.

Those of skill in the art will appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by one or more processor(s), or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In accordance with the description herein, suitable computing devices include, by way of non-limiting examples, server computers, desktop computers, laptop computers, notebook computers, sub-notebook computers, netbook computers, netpad computers, set-top computers, media streaming devices, handheld computers, Internet appliances, mobile smartphones, tablet computers, personal digital assistants, video game consoles, and vehicles. Those of skill in the art will also recognize that select televisions, video players, and digital music players with optional computer network connectivity are suitable for use in the system described herein. Suitable tablet computers, in various embodiments, include those with booklet, slate, and convertible configurations, known to those of skill in the art.

In some embodiments, the computing device includes an operating system configured to perform executable instructions. The operating system is, for example, software, including programs and data, which manages the device's hardware and provides services for execution of applications. Those of skill in the art will recognize that suitable server operating systems include, by way of non-limiting examples, FreeBSD, OpenBSD, NetBSD^{®}, Linux, Apple^{®} Mac OS X Server^{®}, Oracle^{®} Solaris^{®}, Windows Server^{®}, and Novell^{®} NetWare^{®}. Those of skill in the art will recognize that suitable personal computer operating systems include, by way of non-limiting examples, Microsoft^{®} Windows^{®}, Apple^{®} Mac OS X^{®}, UNIX^{®}, and UNIX-like operating systems such as GNU/Linux^{®}. In some embodiments, the operating system is provided by cloud computing. Those of skill in the art will also recognize that suitable mobile smartphone operating systems include, by way of non-limiting examples, Nokia^{®} Symbian^{®} OS, Apple^{®} iOS^{®}, Research In Motion^{®} BlackBerry OS^{®}, Google^{®} Android^{®}, Microsoft^{®} Windows Phone^{®} OS, Microsoft^{®} Windows Mobile^{®} OS, Linux^{®}, and Palm^{®} WebOS^{®}. Those of skill in the art will also recognize that suitable media streaming device operating systems include, by way of non-limiting examples, Apple TV^{®}, Roku^{®}, Boxee^{®}, Google TV^{®}, Google Chromecast^{®}, Amazon Fire^{®}, and Samsung^{®} HomeSync^{®}. Those of skill in the art will also recognize that suitable video game console operating systems include, by way of non-limiting examples, Sony^{®} PS3^{®}, Sony^{®} PS4^{®}, Microsoft^{®} Xbox 360^{®}, Microsoft Xbox One, Nintendo^{®} Wii^{®}, Nintendo^{®} Wii U^{®}, and Ouya^{®}.

### Non-transitory computer readable storage medium

In some embodiments, the platforms, systems, media, and methods disclosed herein include one or more non-transitory computer readable storage media encoded with a program including instructions executable by the operating system of an optionally networked computing device. In further embodiments, a computer readable storage medium is a tangible component of a computing device. In still further embodiments, a computer readable storage medium is optionally removable from a computing device. In some embodiments, a computer readable storage medium includes, by way of non-limiting examples, CD-ROMs, DVDs, flash memory devices, solid state memory, magnetic disk drives, magnetic tape drives, optical disk drives, distributed computing systems including cloud computing systems and services, and the like. In some cases, the program and instructions are permanently, substantially permanently, semi-permanently, or non-transitorily encoded on the media.

### Computer program

In some embodiments, the platforms, systems, media, and methods disclosed herein include at least one computer program, or use of the same. A computer program includes a sequence of instructions, executable by one or more processor(s) of the computing device's CPU, written to perform a specified task. Computer readable instructions may be implemented as program modules, such as functions, objects, Application Programming Interfaces (APIs), computing data structures, and the like, that perform particular tasks or implement particular abstract data types. In light of the disclosure provided herein, those of skill in the art will recognize that a computer program may be written in various versions of various languages.

The functionality of the computer readable instructions may be combined or distributed as desired in various environments. In some embodiments, a computer program comprises one sequence of instructions. In some embodiments, a computer program comprises a plurality of sequences of instructions. In some embodiments, a computer program is provided from one location. In other embodiments, a computer program is provided from a plurality of locations. In various embodiments, a computer program includes one or more software modules. In various embodiments, a computer program includes, in part or in whole, one or more web applications, one or more mobile applications, one or more standalone applications, one or more web browser plug-ins, extensions, add-ins, or add-ons, or combinations thereof.

### Standalone Application

In some embodiments, a computer program includes a standalone application, which is a program that is run as an independent computer process, not an add-on to an existing process, e.g., not a plug-in. Those of skill in the art will recognize that standalone applications are often compiled. A compiler is a computer program(s) that transforms source code written in a programming language into binary object code such as assembly language or machine code. Suitable compiled programming languages include, by way of non-limiting examples, C, C++, Objective-C, COBOL, Delphi, Eiffel, Java^{™}, Lisp, Python^{™}, Visual Basic, and VB.NET, or combinations thereof. Compilation is often performed, at least in part, to create an executable program. In some embodiments, a computer program includes one or more executable complied applications.

### Software Modules

In some embodiments, the platforms, systems, media, and methods disclosed herein include software, server, and/or database modules, or use of the same. In view of the disclosure provided herein, software modules are created by techniques known to those of skill in the art using machines, software, and languages known to the art. The software modules disclosed herein are implemented in a multitude of ways. In various embodiments, a software module comprises a file, a section of code, a programming object, a programming structure, or combinations thereof. In further various embodiments, a software module comprises a plurality of files, a plurality of sections of code, a plurality of programming objects, a plurality of programming structures, or combinations thereof. In various embodiments, the one or more software modules comprise, by way of non-limiting examples, a web application, a mobile application, and a standalone application. In some embodiments, software modules are in one computer program or application. In other embodiments, software modules are in more than one computer program or application. In some embodiments, software modules are hosted on one machine. In other embodiments, software modules are hosted on more than one machine. In further embodiments, software modules are hosted on a distributed computing platform such as a cloud computing platform. In some embodiments, software modules are hosted on one or more machines in one location. In other embodiments, software modules are hosted on one or more machines in more than one location.

### Databases

In some embodiments, the platforms, systems, media, and methods disclosed herein include one or more databases, or use of the same. In view of the disclosure provided herein, those of skill in the art will recognize that many databases are suitable for storage and retrieval of tooth cutting information. In various embodiments, suitable databases include, by way of non-limiting examples, relational databases, non-relational databases, object oriented databases, object databases, entity-relationship model databases, associative databases, and XML databases. Further non-limiting examples include SQL, PostgreSQL, MySQL, Oracle, DB2, and Sybase. In some embodiments, a database is internet-based. In further embodiments, a database is web-based. In still further embodiments, a database is cloud computing-based. In a particular embodiment, a database is a distributed database. In other embodiments, a database is based on one or more local computer storage devices.

While preferred embodiments of the present disclosure have been shown and described herein, it will be obvious to those skilled in the art that such embodiments are provided by way of example only. Numerous variations, changes, and substitutions will now occur to those skilled in the art without departing from the invention which is defined by the appended claims.

## Claims

1. A tooth clamp (1600) for performing a dental procedure on a subject, the tooth clamp comprising:
(a) a clamp insert (1610), which comprises a compressible portion and has one or more interior surfaces shaped with a negative imprint corresponding with at least a portion of a first row of teeth of the subject;
(b) a clamp frame (1620), which comprises:
(i) a first arch segment, configured to couple to the first row of teeth, wherein the first arch segment has a procedure access opening (1621) therethrough;
(ii) a clamp insert coupling (1622), which receives the clamp insert (1610);
(iii) a second arch segment engaging at least a portion of a second row of teeth of the subject opposite the first row of teeth, the second arch segment comprising an arcuate channel;
(iv) a cheek retracting surface (1640) coupled to at least a portion of the first arch segment, at least a portion of the second arch segment, or both; and
(v) a coupling mechanism extending from at least a portion of the first arch segment, at least a portion of the second arch segment, or both, wherein the coupling mechanism couples to a dental cutting machine, and
(c) a tightening mechanism (1730) operable to compress the compressible portion to clamp the tooth clamp to the at least a portion of the first row of teeth of the subject.

2. The tooth clamp (1600) of claim 1, wherein the first arch segment is an maxillary arch segment and wherein the second arch segment is a mandibular arch segment.

3. The tooth clamp (1600) of claim 1, wherein the first arch segment is a mandibular arch segment and wherein the second arch segment is an maxillary arch segment.

4. The tooth clamp (1600) of claim 1, wherein the negative imprint of the tooth of the subject is determined based on a dental arch anatomy scan.

5. The tooth clamp (1600) of claim 1, wherein a wall of the procedure access opening is shaped based on negative imprint of a treatment tooth of the subject.

6. The tooth clamp (1600) of claim 1, wherein at least a portion of the first arch segment is removable from another portion of the first arch segment.

7. The tooth clamp (1600) of claim 1, wherein the coupling mechanism further comprises a fiducial.

8. The tooth clamp (1600) of claim 1, wherein the coupling mechanism is a rigid coupling mechanism.

9. The tooth clamp (1600) of claim 1, wherein the coupling mechanism comprises a pin, a threaded feature, a clip, a magnet, a nut, a bolt, a catch, a clasp, or any combination thereof.

10. The tooth clamp (1600) of claim 1, formed by 3D printing, injection molding, or both.

11. The tooth clamp (1600) of claim 1, further comprising a tongue blocking portion extending from at least a portion of the first arch segment, at least a portion of the second arch segment, or both.

12. The tooth clamp (1600) of claim 1, further comprising a gasket coupled to at least a portion of the first arch segment configured to suction the tooth clamp to the tooth of the subject.

13. The tooth clamp of claim 1, wherein the tightening mechanism (1730) comprises a cam, a slide, a wedge, a gear, a pulley, a worm drive, a bar linkage, a ratchet, a spring, a lever a spring, or any combination thereof.

14. A tooth clamp system comprising:
a robotic dental cutting machine (2300); and
the tooth clamp (1600) of any one of claims 1-13.

15. The tooth clamp system of claim 14, wherein the robotic dental cutting machine (2300) comprises:
a first portion (2310A);
a second portion (2310B); and
a cutting mechanism (2320),
wherein the first portion (2310A) is configured to couple to the tooth clamp (1600), and the second portion (2310B) is operable to move relative to the first portion (2310A) to perform a dental procedure on a tooth of the subject (2410) with the cutting mechanism (2320).

## Patentansprüche

1. Zahnklemme (1600) zum Durchführen eines Zahneingriffs an einem Subjekt, wobei die Zahnklemme Folgendes umfasst:
(a) einen Klemmeinsatz (1610), der einen komprimierbaren Abschnitt umfasst und eine oder mehrere Innenflächen aufweist, die mit einem Negativabdruck geformt sind, der mindestens einem Abschnitt einer ersten Reihe von Zähnen des Subjekts entspricht;
(b) einen Klemmrahmen (1620), der Folgendes umfasst:
(i) ein erstes Bogensegment, das konfiguriert ist, um mit der ersten Reihe von Zähnen gekoppelt zu werden, wobei das erste Bogensegment eine Eingriffszugangsöffnung (1621) dadurch aufweist;
(ii) eine Klemmeinsatzkopplung (1622), die den Klemmeinsatz (1610) aufnimmt;
(iii) ein zweites Bogensegment, das mindestens einen Abschnitt einer zweiten Reihe von Zähnen des Subjekts, die der ersten Reihe von Zähnen gegenüberliegt, in Eingriff nimmt, wobei das zweite Bogensegment einen bogenförmigen Kanal umfasst;
(iv) eine Wangenrückzugsfläche (1640), die mit mindestens einem Abschnitt des ersten Bogensegments, mindestens einem Abschnitt des zweiten Bogensegments oder beiden gekoppelt ist; und
(v) einen Kopplungsmechanismus, der sich von mindestens einem Abschnitt des ersten Bogensegments, mindestens einem Abschnitt des zweiten Bogensegments oder beiden erstreckt, wobei der Kopplungsmechanismus mit einer Zahnschneidemaschine gekoppelt ist, und
(c) einen Spannmechanismus (1730), der betreibbar ist, um den komprimierbaren Abschnitt zu komprimieren, um die Zahnklemme an den mindestens einen Abschnitt der ersten Reihe von Zähnen des Subjekts zu klemmen.

2. Zahnklemme (1600) nach Anspruch 1, wobei das erste Bogensegment ein Oberkieferbogensegment ist und wobei das zweite Bogensegment ein Unterkieferbogensegment ist.

3. Zahnklemme (1600) nach Anspruch 1, wobei das erste Bogensegment ein Unterkieferbogensegment ist und wobei das zweite Bogensegment ein Oberkieferbogensegment ist.

4. Zahnklemme (1600) nach Anspruch 1, wobei der Negativabdruck des Zahns des Subjekts basierend auf einem Zahnbogenanatomiescan bestimmt wird.

5. Zahnklemme (1600) nach Anspruch 1, wobei eine Wand der Eingriffszugangsöffnung basierend auf einem Negativabdruck eines Behandlungszahns des Subjekts geformt ist.

6. Zahnklemme (1600) nach Anspruch 1, wobei mindestens ein Abschnitt des ersten Bogensegments von einem anderen Abschnitt des ersten Bogensegments entfernbar ist.

7. Zahnklemme (1600) nach Anspruch 1, wobei der Kopplungsmechanismus ferner eine Bezugsmarke umfasst.

8. Zahnklemme (1600) nach Anspruch 1, wobei der Kopplungsmechanismus ein starrer Kopplungsmechanismus ist.

9. Zahnklemme (1600) nach Anspruch 1, wobei der Kopplungsmechanismus einen Stift, ein Gewindemerkmal, eine Klemme, einen Magneten, eine Mutter, einen Bolzen, eine Arretierung, eine Klammer oder eine beliebige Kombination davon umfasst.

10. Zahnklemme (1600) nach Anspruch 1, die durch 3D-Drucken, Spritzgießen oder beides gebildet ist.

11. Zahnklemme (1600) nach Anspruch 1, die ferner einen Zungenblockierabschnitt umfasst, der sich von mindestens einem Abschnitt des ersten Bogensegments, mindestens einem Abschnitt des zweiten Bogensegments oder beiden erstreckt.

12. Zahnklemme (1600) nach Anspruch 1, die ferner eine Dichtung umfasst, die mit mindestens einem Abschnitt des ersten Bogensegments gekoppelt ist, der konfiguriert ist, um die Zahnklemme an den Zahn des Subjekts zu saugen.

13. Zahnklemme nach Anspruch 1, wobei der Spannmechanismus (1730) einen Nocken, einen Schieber, einen Keil, ein Zahnrad, eine Riemenscheibe, einen Schneckenantrieb, eine Stangenverbindung, eine Ratsche, eine Feder, einen Hebel, eine Feder oder eine beliebige Kombination davon umfasst.

14. Zahnklemmensystem, das Folgendes umfasst:
eine robotische Zahnschneidemaschine (2300); und
die Zahnklemme (1600) nach einem der Ansprüche 1-13.

15. Zahnklemmensystem nach Anspruch 14, wobei die robotische Zahnschneidemaschine (2300) Folgendes umfasst:
einen ersten Abschnitt (2310A);
einen zweiten Abschnitt (2310B); und
einen Schneidemechanismus (2320),
wobei der erste Abschnitt (231oA) konfiguriert ist, um mit der Zahnklemme (1600) gekoppelt zu werden, und der zweite Abschnitt (231oB) betreibbar ist, um sich relativ zu dem ersten Abschnitt (231oA) zu bewegen, um einen Zahneingriff an einem Zahn des Subjekts (2410) mit dem Schneidemechanismus (2320) durchzuführen.

## Revendications

1. Pince à dents (1600) destinée à effectuer une procédure dentaire sur un sujet, la pince à dents comprenant :
(a) un insert de pince (1610), qui comprend une partie compressible et qui possède une ou plusieurs surfaces intérieures formées avec une empreinte négative qui correspond à au moins une partie d'une première rangée de dents du sujet ;
(b) une armature de pince (1620), qui comprend :
(i) un premier segment d'arc, configuré pour s'accoupler à la première rangée de dents, dans laquelle le premier segment d'arc présente une ouverture d'accès destinée à la procédure (1621) qui le traverse ;
(ii) un couplage pour insert de pince (1622), qui reçoit l'insert de pince (1610) ;
(iii) un deuxième segment d'arc qui engage au moins une partie d'une deuxième rangée de dents du sujet opposée à la première rangée de dents, le deuxième segment d'arc comprenant un canal arqué ;
(iv) une surface de rétraction de joue (1640) couplée à au moins une partie du premier segment d'arc, au moins une partie du deuxième segment d'arc, ou les deux ; et
(v) un mécanisme de couplage qui s'étend depuis au moins une partie du premier segment d'arc, au moins une partie du deuxième segment d'arc, ou les deux, dans laquelle le mécanisme de couplage se couple à une machine de découpe dentaire, et
(c) un mécanisme de serrage (1730) capable de comprimer la partie compressible afin de serrer la pince à dents sur l'au moins une partie de la première rangée de dents du sujet.

2. Pince à dents (1600) selon la revendication 1, dans laquelle le premier segment d'arc est un segment d'arc maxillaire et dans laquelle le deuxième segment d'arc est un segment d'arc mandibulaire.

3. Pince à dents (1600) selon la revendication 1, dans laquelle le premier segment d'arc est un segment d'arc mandibulaire et dans laquelle le deuxième segment d'arc est un segment d'arc maxillaire.

4. Pince à dents (1600) selon la revendication 1, dans laquelle l'empreinte négative des dents du sujet est déterminée sur la base d'un scan d'anatomie d'arc dentaire.

5. Pince à dents (1600) selon la revendication 1, dans laquelle une paroi de l'ouverture d'accès destinée à la procédure est mise en forme sur la base de l'empreinte négative d'une dent à traiter du sujet.

6. Pince à dents (1600) selon la revendication 1, dans laquelle au moins une partie du premier segment d'arc peut être retirée d'une autre partie du premier segment d'arc.

7. Pince à dents (1600) selon la revendication 1, dans laquelle le mécanisme de couplage comprend en outre un repère.

8. Pince à dents (1600) selon la revendication 1, dans laquelle le mécanisme de couplage est un mécanisme de couplage rigide.

9. Pince à dents (1600) selon la revendication 1, dans laquelle le mécanisme de couplage comprend une broche, un élément fileté, une attache, un aimant, un écrou, un boulon, une clenchette, un crochet, ou n'importe quelle combinaison de ceux-ci.

10. Pince à dents (1600) selon la revendication 1, formée par impression 3D, moulage par injection, ou les deux.

11. Pince à dents (1600) selon la revendication 1, comprenant en outre une partie de blocage de la langue qui s'étend depuis au moins une partie du premier segment d'arc, au moins une partie du deuxième segment d'arc, ou les deux.

12. Pince à dents (1600) selon la revendication 1, comprenant en outre un joint couplé à au moins une partie du premier segment d'arc configuré pour aspirer la pince à dents vers les dents du sujet.

13. Pince à dents (1600) selon la revendication 1, dans laquelle le mécanisme de serrage (1730) comprend une came, une glissière, une cale, un engrenage, une poulie, un engrenage à vis sans fin, une liaison sous forme de barre, un cliquet, un ressort, un levier, ou n'importe quelle combinaison de ceux-ci.

14. Système de pince à dents comprenant :
une machine de découpe dentaire robotisée (2300) ; et
la pince à dents (1600) selon l'une quelconque des revendications 1 à 13.

15. Système de pince à dents selon la revendication 14, dans lequel la machine de découpe dentaire robotisée (2300) comprend :
une première partie (2310A) ;
une deuxième partie (2310B) ; et
un mécanisme de découpe (2320),
dans lequel la première partie (2310A) est configurée pour se coupler à la pince à dents (1600), et la deuxième partie (2310B) peut se déplacer par rapport à la première partie (2310A) afin d'effectuer une procédure dentaire sur une dent du sujet (2410) avec le mécanisme de découpe (2320).
